# EUROPEAN PATENT SPECIFICATION

(11) **EP 3 401 375 B1**
(45) Date of publication and mention of the grant of the patent: **11.11.2020**
(21) Application number: 18460027.8
(22) Date of filing: 02.05.2018
(51) Int. Cl.: C09D 175/00

(54) **METHOD OF MANUFACTURING OF THE THERMOACTIVE ACRYLIC PAINT**
VERFAHREN ZUR HERSTELLUNG VON THERMOAKTIVER ACRYLFARBE
PROCÉDÉ DE FABRICATION DE PEINTURE ACRYLIQUE THERMOACTIVE

(30) Priority: 10.05.2017 PL 42156117
(43) Date of publication of application: 14.11.2018
(73) Proprietor: Ekobokra Kajmar WASZUT Jolanta, 43-400 Cieszyn (PL); Akkoc, Serkan, 60599 Frankfurt am Main (DE); Wysota, Christof, 61118 Bad Vilbel (DE)
(72) Inventor: WASZUT, Marek, 43-474 Koniaków 231 (PL)
(74) Representative: Karczmitowicz, Teresa Ewa

(56) References cited:
- EP-A1- 3 006 513
- WO-A1-2016/176389
- CN-A- 101 085 892
- CN-A- 105 086 812
- CN-A- 105 153 827
- CN-A- 105 669 088

## Description

A subject of the present invention is method of manufacturing a thermoactive acrylic paint, accumulating, reflecting and dispersing long electromagnetic waves within the infrared range, constituting also a thermal barrier, to be applied in housing and industrial spaces, such as staircases, basements, storage and production halls, etc., and also wherever it is not possible to provide other insulation protection and spaces are exposed to considerable dampness and formation of fungi and mould on cold wet surfaces.
Since ancient times solutions have been searched to be used in different branches of industry and housing facilities to limit damage arising from the loss of thermal energy, harmful effects of chemical and biological factors on such facilities and equipment, and which at the same time would have the aesthetic values. It is commonly known that to provide thermal protection of buildings various insulation coatings are used based on mineral wool, expanded polystyrene and different kinds of thermal-insulation paints containing fillers.

For instance, from a description of a patent application no CN105670396 (A) a method of manufacturing the thermal-insulation paint intended for covering interior walls is known; the paint consists of: 15-20 kg of asbestos fibres, 10-15 kg of nano kaolin, 5-10 kg of mica powder, 10-15 kg of nano zinc oxide, 5-10 kg of flame retardant, 5-10 kg of ethylenediamine tetra(methylene phosphonic acid) sodium salt, 5-10 kg of anti-freeze agent, 5-10 kg of tributyl phosphate, 15-20 kg of carboxymethyl cellulose and 800-100 kg of water, and manufacturing is performed through subsequent taking the prescribed weight of the listed ingredients and dosing them into the mixer containing water preheated to the temperature of 30-40°C, stirring and heating up the composition to the temperature of 90°C and maintaining this temperature for 30 minutes, and afterwards the product is deemed ready to use. The paint manufactured in that way is nontoxic, environment-friendly, heat-resistant, and has good insulating and filling properties, and it is also resistant to cracking.

An invention described in the Chinese patent application CN105669088 (A) relates to the ecological, thermal-insulation paint intended for painting building walls; the description discloses method of manufacturing and composition of product manufactured in this way, which is as follows: 15-20 kg of zinc borate, 10-15 kg of zinc silicate, 5-10 kg of ethyl cellulose, 10-15 kg of polyester resin, 5-10 kg of flame retardant, 5-10 kg of polyacrylic acid, 5-10 kg of rice husk, 5-10 kg of silica dust, 15-20 kg of expanded perlite and 800-1,000 kg of solvent. After taking the prescribed weight of the ingredients, they are subsequently dosed to the solvent preheated in the mixer to the temperature of 30-40°C; then the whole mixture is homogenised, and afterwards its temperature is raised to 90°C and after 30 minutes of maintaining the tank content in this temperature, the product is deemed finished.

A description presented in the patent application no CN105086812 (A) refers to method of manufacturing of a high quality, thermal-insulation emulsion paint, which is environment-friendly and resistant to cracking; the description discloses a formulation consisting of: 5-7 parts by weight of silicate solution, 23-26 parts by weight of urethane acrylates, 1-2 parts by weight of aluminium sulphate, 1-2 parts by weight of the TA brightening agent, 3-5 parts by weight of nano zinc oxide, 20-22 parts by weight of nano titanium oxide, 2-4 parts by weight of calcium peroxide, 2.5-4 parts by weight of spherical glass micro-balls, 3-5 parts by weight of expanded perlite 90-100 parts by weight of water and 7-9 parts by weight of bonding agent. The emulsion paint according to the invention has outstanding functional characteristics which is achieved by adding hollow glass microspheres and expanded perlite, thus obtaining excellent performance in relation to thermal insulation. The emulsion paint according to the invention is energy saving and provides thermal insulation, it has outstanding resistance to cracking, water and corrosion.

The patent application of the Korean invention no KR20000017699 (A) discloses a method of manufacturing water-soluble paint composition which may insulate heat (adiabatic), containing in its composition such substances as emulsion resins of styrene-acrylic copolymer containing hollow particles ensuring low thermal conductivity, excellent resistance to weather conditions and resistance to water. In the description of the invention, it is pointed out that inorganic silicate compounds in the form of hollow particles, e.g. mica, have excellent thermal insulation properties, chemical resistance and they provide protection against rust. The paint composition consists of: 5-40 wt % of the solid suspension which has hollow pores generated during drying, 5-20 wt % of inorganic silicates in hollow form and with empty spaces enabling reduction of thermal conductivity. It also contains 10-30 wt % of mica which has good thermal insulation properties.

In Chinese patent application no CN101085892, a thermal-insulation interior wall paint was disclosed and the method of its preparation. Ingredients of the wall paint are as follows: styrene-acrylic emulsion in the quantity of 28-35% with dry matter content of 48-52% m/m, titanium dioxide in the quantity of 8-13%, filler in the quantity of 10-18%, borosilicate balls in the quantity of 6-12%, water mould control in the quantity of 0.5-2%, defoamer in the quantity of 0.3-0.5%, hydrophilic agent in the quantity from 0.15% to 0.25%, thickening agent in the quantity from 0.25% to 1.0%, agent improving the rheology in the quantity of 0.4-0.8%, fungicide in the quantity of 0,4-0,8%, pH regulator in the quantity of 0.1-0.3%, dispersant in the quantity from 0.5% to 0.7%, film-forming additive in the quantity of 1.2-2.0%, anti-freeze agent in the quantity of 2.0-3.0%, water in the quantity of 18-30%.

The method of making the interior thermal-insulation paint is characteristic of its manufacturing stages, i.e.:
1. Making the Premix: 70 to 80% of the total quantity of water is added to the dispersion tank, and then the following are added: wetting agent, dispersant, ½ of the anti-foaming agent, fungicide, thickener. The ingredients are added to water and mixed for 10 to 15 minutes with low mixing speed, from 300 to 500 rpm, to obtain a homogenous solution;
2. Dispersing and crushing: titanium dioxide and fillers are added to the homogeneous solution made on stage 1/ and they are dispersed with high speed for 15-20 minutes with the mixing speed of 1,200-1,500 rpm to obtain a homogenous suspension;
3. Composing the paint: the produced suspension is added to the tank as well as the styrene-acrylic emulsion, film-forming agent, anti-freeze agent, rheologic agents and water mould control, and the whole is mixed, and then hollow borosilicate micro-balls are added, divided into 2 to 3 portions, each time mixing is made with the speed of 200 ∼ 300 rpm, and in the end the remaining quantity of anti-foaming agent and water are added.

Another Chinese patent application No CN105153827 describes a thermal-insulation coating and method of making same. Ingredients of the coating according to CN105153827 are: acrylic emulsion in the quantity of 20-25%, paraffin wax in the quantity of 20-25%, emulsion of epoxy-acrylic resin in the quantity of 3-8%, inorganic fibres: mineral wool and fibres of aluminium silicate in the 1:3 ratio in the quantity of 5-7%, ceramic 200-300 mesh in the quantity of 3-5%, glass microspheres in the quantity of 2-5%, zirconium dioxide dust 300-700 mesh in the quantity of 1-5%, thickener in the quantity of 1-3%, defoamer in the quantity of 2%, titanium dioxide in the quantity of 5-7%, aluminium powder in the quantity of 5-10%, co-solvent in the quantity of 2%, stabiliser - polyoxyethylene ethers of higher fatty alcohols, polyoxypropylene glycol or polytetramethylene 1-diol in the quantity of 1-2%, equalising agent in the quantity of 0.5-2%, and deionised water in the quantity of 12-17%.

The insulation coating is manufactured in the following stages:
1. 20-25% of paraffin wax is heated until it is melted and then 3-8% of the epoxy resin emulsion is added, mixing, to make a homogeneous dispersion of paraffin emulsion,
2. on the second stage, a homogenous latex obtained on the first stage (dispersion of paraffin wax with inorganic fibres) is mixed with 12-17% of deionised water and then 3-5% of hollow ceramic microspheres are added and 3-5% of the hollow glass micro-balls, 1-5% of zirconium dioxide ceramic powder, 5-7% of titanium dioxide, and 5-10% of aluminium powder.
3. on the third stage two solutions are mixed with the 20-25% acrylic emulsion with the speed of 800-1,000 rpm, and 1-2% of the co-solvent and 0.5-1% of the anti-foaming agent are added. Further mixing is performed for 10-20 minutes and the following are added 1-3% of thickeners, 1-2% of the stabiliser, 0.5-2% of the equalising agent. Time of subsequent mixing is 30-40 minutes. It is continued until homogeneity is obtained, and then 0.5-1% of the anti-foaming agent is added.

The European patent No.EP3006513 describes the acrylic coating composition comprises, relative to the total weight of the composition: 50 - 65% of an aqueous dispersion at 50 - 60% of acrylic copolymers; ; 0.1-0.5% of polyacrylate dispersants; 0.1- 0.5% of moisturizing agents; 0.3 - 0.6% of anti-foaming agents; 0.15 - 0.20% of preservatives; 0.7- 0.9% of film protector biocides; 0.1- 0.3% of thickeners and 20 - 35% of a filler, wherein the filler comprising hollow spherical particles of glass, titanium dioxide (TiO2), calcium carbonate (CaCO3) and barite (BaSO4), in a weight percentage relative to the total of the component:
- between 25 and 30% of hollow glass spheres;
- between 32 and 36% of titanium dioxide;
- between 32 and 36% of calcium carbonate; and
- between 2 and 5% de barium sulfate.
Also, the acrylic coating composition contains components commonly used in lacquers and coatings.

The patent application No. WO2016/176389, title: "Crosslinkable fluorinated urethane additives for durable exterior coatings" discloses a composition comprising from about 95 to 99.98% by weight a coating base selected from a water-dispersed coating, an epoxy polymer coating, an alkyd coating, a urethane coating, or an unsaturated polyester coating; and from about 0.02 to 5% by weight a crosslinkable additive, where the crosslinkable additive compound cotains the reaction product of reagents comprising:
(a) at least one isocyanate compound having at least 2 isocyanate groups, or a mixture of said compounds;
(b) at least one perfluoroalkyl mono-alcohol of Formula (I), or a mixture of said fluorinated mono-alcohols;
(c) at least one isocyanate-reactive compound having one isocyanate-reactive functional group selected from OH, NH2, or SH, and having at least one ethylenically unsaturated group;
(d) at least one isocyanate-reactive compound having at least one terminal carboxylic acid and one isocyanate-reactive functional group selected from OH, NH2, or SH; and
(e) optionally, at least one additional isocyanate-reactive compound selected from water, alkoxylated diols, or hydroxyl-functional photoinitiator compounds;
provided that if the isocyanate compound (a) has 2 isocyanate groups, then water is present as an additional isocyanate-reactive compound (e).

Various kinds of thermal insulation materials are widely used in construction industry. A thermal insulation material is a material whose thermal conductivity is lower than 0.05 W/ mK. This requirement is fulfilled by materials manufactured from specially foamed plastics, e.g. polystyrene, polyurethane and porous materials of mineral and organic origin, i.e. basalt, glass fibres, and cellulose.

Traditional products for thermal insulation which are commonly used and available in the market such as mineral wool, expanded polystyrene EPS and extruded polystyrene XPS have the thermal conductivity coefficient of approx. 0.03 W/mK. Traditional polystyrene slabs have the λ coefficient of 0.031-0.042 W/(mK), and in case of flexible slabs λ is 0.042-0.043 W/(mK). Black polystyrene slabs containing graphite which increases their insulation properties have the best value of the λ coefficient, within the range from 0.032 to 0.033 W/(mK), and low density. Polystyrene pellets used for insulation of flat roofs and attics have poorer thermal insulation properties than slabs. In case of mineral wool, the thermal conductivity coefficient depends on product type (soft, medium hard, hard) and it is within the range from 0.030 to 0.045 W/(mK) (source: Anna Burkowicz, Expanded Perlite - Thermal-insulation Material, Cracow, year 2016, no 96, p. 7-22).

Purpose of the invention is method of manufacturing a thermoactive acrylic paint, quick-drying, water-borne, accumulative, reflective, dispersive of long electromagnetic waves in the infrared range, and providing a thermal barrier.

Method of manufacturing of the thermoactive acrylic paint consists of three stages and it involves preparation of Premixes (Premix 1 and 2) which are subsequently mixed with each other to make the finished product.

On the first stage according to the present invention, the first Premix is made (hereinafter referred to as Premix 1) where 45-48% water dispersion of acrylic copolymers in the quantity of 46 to 50 wt %, preferably 48.6 wt % is heated up to the temperature of 30 to 40°C in the process of continuous, dynamic stirring, then auxiliary agents are added, i.e. from 1.3 to 1.6 wt %, preferably 1.5 wt % of 50% water solution of polymeric dispersant to facilitate distribution of the fillers and pigments suspension. Subsequently, with homogenisation process maintained, the following are added:
1. anti-foaming agent in the quantity from 0.75 to 0.85 wt %, preferably 0.8 wt % of 26% water solution of polyethersiloxane defoamer with silica;
2. from 1.4 to 1.5 wt %, preferably 1.5 wt % weight of 100% surface-active alkanodiol agent;
3. from 1.3 to 1.5 wt %, preferably 1.4 wt % of surface-active siloxane agent.

The acrylic dispersion is homogenised with the auxiliary agents for 5 to 10 minutes. Subsequently, during further homogenisation from 19 to 20 wt %, preferably 19.5 wt % of titanium dioxide (TiO₂) of the Rutile quality are added and the whole is dynamically homogenised for 15 minutes at least, and afterwards the following are added: from 12 to 13 wt %, preferably 12.5 wt % of micronized calcium carbonate and from 4.2 to 4.6 wt %, preferably 4.5 wt % of micronized kaolin (4SiO₂x2Al₂O₃x4H₂O), and subsequently the following are added:
- from 1.4 to 1.5 wt %, preferably 1.5 wt % of coalescent in the form of an alcohol ester, and
- from 2.2 to 2.4 wt %, preferably 2.3 wt % of isopropanol,
- from 2.0 to 2.4 wt %, preferably 2.2 wt % of hydrophobically modified ethylene oxide-urethane (HEUR) block copolymer,
- from 4.0 to 4.5 wt %, preferably 4.2 wt % of demineralised water to make up for losses which occurred during mixing.

The whole is mixed for 20 to 30 minutes maintaining the temperature of the process within the range from 30 to 40°C. Process of mixing is conducted keeping the stirrer rotations within the range of 120-160 rpm.

Purely acrylic dispersion used to make the Premix 1, as a water emulsion of acrylic polymers, is characteristic of excellent adhesiveness to the surface, quick-drying, good hardness, chemical resistance and resistance to operating conditions.

Surfactants, as auxiliary agents, are responsible for reduction of surface tension, they facilitate wetting of fillers and pigments, and furthermore they improve the appearance of the applied paint coatings and prevent formation of craters in them. The coalescent additive lowers the temperature at with the acrylic polymer makes an evenly crosslinked coating during physical drying in the air, and the urethane polymer improves the flow, and prevents dripping. Thanks to it, the use of protective biocides is avoided.

On the second stage of manufacturing according to the present invention, Premix 2 is produced: demineralised water in the quantity from 42 to 45 wt %, preferably 44 wt % is placed in the mixer equipped with a high-speed stirrer and it is heated up to the temperature within the range from 30 to 40°C and intensely stirred; afterwards the following are added:
- from 0.4 to 0.5 wt %, preferably 0.5 wt % of surface-active siloxane agent,
- from 0.8 to 0.9 wt %, preferably 0.8 wt % of 26% water solution of polyethersiloxane defoamer with silica,
- from 1.2 to 1.6 wt %, preferably 1.5 wt % of 50% water solution of non-ionic polymeric dispersant,
- and preferably from 1 to 20 ppm water solution of metallic silver nanoparticles having the size within the range between 3 to 15 nm, embedded on a polyphenol matrix.

Stirrer speed necessary to mix the products is from 500 to 600 rpm. The whole is mixed until a completely homogenised mixture is obtained however, for 20 min minimum; then the stirrer rotation speed is reduced to 30 to 40 rpm and the following are subsequently added to the mixer:
- from 26 to 29 wt %, preferably 28 wt % of powdered copolymer of vinyl acetate and vinyl EDTA with an additive of polyvinyl alcohol, and
- from 20 to 24 wt %, preferably 21 wt % of borosilicate glass microspheres and homogenisation of the whole is continued for 10 to 15 min maintaining low rotation speed of the stirrer, not exceeding 30 to 40 rpm.

On the final stage, with mixing continuously maintained, a thickener is added, i.e. from 3.9 to 4.4 wt %, preferably 4.2 wt % of hydrophobically modified ethylene oxide-urethane (HEUR) block copolymer. Uninterrupted mixing is continued for 20 to 30 min, in the process temperature kept between 30 and 40°C. The additive of urethane block copolymer enables obtaining a homogeneous consistency of Premix 2, preventing sedimentation of glass spheres.

The surface-active siloxane agent used in Premix 2 reduces the surface tension, moistens the base surface, improves flow and prevents formation of craters in paint coat. Polymeric dispersant excellently wets the organic and inorganic pigments and fillers, and copolymer of vinyl acetate and vinyl EDTA with polyvinyl alcohol and mineral anti-cracking additives constitute a binder to support the glass spheres, i.e. closed and hollow borosilicate glass balls, with wall thickness appropriate to resist forces occurring during stirring and application of the coating. Glass balls (microspheres) used here are hollow micro-balls made of borosilicate glass of particles density within the range from 0.125 to 0.6 g/ml, average particle size of 10-120 microns, wall thickness 0.5-1.5 microns and compressive strength of 17-1,240 bar. Hollow glass microspheres may additionally be airless in the empty closed spaces which enables to reduce thermal conductivity and enhance thermal accumulation; they may better serve as an acoustic insulation, and impact reduction of the paint coating density.

On the third stage of the method according to the present invention, the previously made Premix 1 and Premix 2 are mixed with each other. Premix 1 in the quantity form 60 to 70 wt % is placed in the mixer equipped with a low-speed stirrer; the substance is continuously mixed by means of the stirrer rotating with the speed of 100 to 120 rpm, the whole is heated up to the temperature from 30 to 40°C. Homogenisation process is conducted for 25 to 35 min, afterwards the rotation speed of the stirrer is reduced to 30 to 40 rpm, and while the mixing is continuously performed Premix 2 in the quantity form 30 to 40 wt % is placed in the mixer and the whole is stirred until complete homogenisation is obtained - for 10 to 30 minutes with the temperature maintained within the rage from 30 to 40°C. Product obtained in this way is a thermoactive acrylic paint.

During numerous research and tests on insulation properties of the thermoactive acrylic paint manufactured by the method according to the present invention it was noticed that the paint layer of 6.3 mm thickness is sufficient to substitute 50 mm layer of mineral wool, or 3.6 mm may substitute 60 mm of extruded polystyrene layer.

Unexpectedly, it turned out that thanks to the use of a unique formulation and special selection of components excellent results are obtained in relation to the paint thermoactivity, i.e. thermal accumulation, insulation and dispersion. The product obtained according to the present invention consists of the following components:
a) Premix 1 - a pigment acrylic base in the quantity of 60-70 wt % of the composition presented below:
   - 46-50 wt %, preferably 48.0 wt % of 45-48% of water dispersion of acrylic copolymers,
   - 1.3-1.6 wt %, preferably 1.5% wt %, of 50% of water solution of polymeric dispersant,
   - 0.75-0.85 wt %, preferably 0.8 wt % of 26% water solution of polyethersiloxane defoamer with silica,
   - 1.4-1.5 wt %, preferably 1.5 wt % of 100% surface-active alkanodiol agent,
   - 1.3-1.5 wt %, preferably 1.4 wt % of surface-active siloxane agent,
   - 19-20 wt %, preferably 19.5 wt % of titanium dioxide (TiO₂),
   - 12-13 wt %, preferably 12.5 wt % of calcium carbonate,
   - 4.2-4.6 wt %, preferably 4.5 wt % of kaolin (4SiO₂x2Al₂O₃x4H₂O),
   - 1.4-1.5 wt %, preferably 1.5 wt % of hydroxyester (of Texanol quality) - coalescent,
   - 2.2-2.4 wt %, preferably 2.3 wt % of isopropanol,
   - 2.2 wt % of hydrophobically modified ethylene oxide-urethane (HEUR) block copolymer - an flow improving and dripping preventing agent,
   - 4.0-4.5 wt %, preferably 4.2 wt % of demineralised water,
b) Premix 2 - glass spheres in polyvinyl binder in the quantity of 30 to 40 wt %, having the following composition:
   - 42-45 wt %, preferably 44 wt % of demineralised water,
   - 0.4-0.5 wt %, preferably 0.5 wt % of surface-active siloxane agent,
   - 0.8-0.9 wt %, preferably 0.8 wt % of 26% water solution of polyethersiloxane defoamer with silica,
   - 1.2-1.6 wt %, preferably 1.5 wt % of 50% water solution of non-ionic polymeric dispersant water solution,
   - preferably 1-20 ppm of metallic silver nanoparticles which have size within the range between 3 to 15 nm,
   - 26-29 wt %, preferably 28 wt % of powdered copolymer of vinyl acetate and vinyl EDTA with an additive of polyvinyl alcohol,
   - 20-24 wt %, preferably 21 wt % of borosilicate glass microspheres having the particle size within the range of 10 to 120 microns, wall thickness of 0.5 to 1.5 microns and compressive strength from 17 to 1,240 bar (hollow inside),
   - 3.9-4.4 wt %, preferably 4.2 wt % of thickener - hydrophobically modified ethylene oxide-urethane (HEUR) block copolymer.

The thermoactive paint produced by the method according to the present invention is a chemical composition obtained by appropriate selection of individual ingredients, their chemical structure and their quantitative share in total composition.

The thermoactive paint produced by the method according to the present invention is an agent which after being applied on the wall improves distribution of heat in the room and when used outdoors ensures excellent thermal insulation. Therefore, it is intended to be used to paint and protect all types of interior and exterior surfaces: mineral, metallic, wooden, glass and plastic; it is environment-friendly, inflammable, nontoxic, vapour-permeable, and provides protection against adverse effects of external factors: aggressive chemical vapours, dampness, mould and fungi.

The product obtained by method according to the present invention is recommended mainly to be used wherever another type of thermal insulation is not possible, and spaces are exposed to high dampness and formation of fungi streaks and mould on cold and wet surfaces.

Qualities of paint according to the present invention:
- has excellent biocide properties, inhibits the growth of pro- and eukaryotic micro-organisms, including mould and fungi,
- a 6.3 mm thick layer of paint according to the present invention has insulation properties equivalent to 50 mm thick layer of mineral wool, and a 3.6 mm layer of paint substitutes 60 mm layer of extruded polystyrene,
- it is vapour-permeable, nontoxic, it has high opacity, it does not emit harmful volatile substances, does not flow down, does not drip, it is resistant to weather conditions and vapours of volatile chemical compounds, it is light (density of approx. 0.850 g/cm³), mixable with dyes and pigments, water-borne, etc.

Furthermore, in comparison to other products in the market, the paint is characteristic of the following qualities:
- it is ecological, i.e. it does not contain harmful substances which may be emitted to the environment, e.g. volatile organic compounds, it does not contain asbestos fibres, as described in the CN105670396 patent, it does not contain barium compounds which are used in some formulations, it does not emit formaldehydes as it is in case of mineral wool manufacturing of which requires urea-formaldehyde resins, and no release of styrene monomer occurs as in case of the extruded polystyrene,
- it has excellent biocide properties, inhibits the growth of pro- and eukaryotic micro-organisms, including mould and fungi,
- it is a very good thermal insulator, and furthermore it has properties of absorption, reflection and dispersion of electromagnetic radiation within the infrared range (thermal) thanks to which an even distribution of heat occurs in the whole room - through dispersion, and thanks to the thermal insulation properties, the heat is not transferred to the cold wall and therefore heating performance increases, practically without any losses.

The invention is presented in the following embodiment.

### Stage 1 - preparation of Premix 1.

Pure dispersion of acrylic polymers (45% water solution) in the quantity of 312.65 kg is placed in the mixer equipped with a high-speed stirrer and while continuously mixed the dispersion is heated up to the temperature of 30-40°C, and then auxiliary agents are added: 9.75 kg of 50% of water solution of polymeric dispersant to facilitate distribution of the fillers and pigments suspension, and afterwards anti-foaming agent is dosed in the quantity of 5.20 kg of 26% water solution of polyethersiloxane defoamer with silica, 9.75 kg of 100% surface-active alkanodiol agent, and then 9.10 kg of surface-active siloxane agent. After a few minutes the acrylic dispersion mixed with the auxiliary agents is ready for homogenisation with titanium dioxide and mineral fillers. First, 126.75 kg of the titanium dioxide (TiO₂) of the Rutile quality is strongly dispersed. After several minutes the effectiveness of dispersion is checked by measuring the fineness of grind by a rod on a glass plate; it is made to evaluate the degree to which the pigment grains have been moistened by the aquatic environment of the emerging paint. Afterwards, fineness of grind is measured by means of a grindometer. If the results are satisfactory, 81.25 kg of micronized calcium carbonate and 29.25 kg of micronized kaolin (4SiO₂x2Al₂O₃x4H₂O) are added, and then coalescent in the quantity of 9.75 kg of hydroxyester (of Texanol quality) and 14.95 kg of isopropanol are added and followed by 14.30 kg of hydrophobically modified ethylene oxide-urethane (HEUR) block copolymer and 27.30 kg of demineralised water to make up for losses which occurred during mixing. The whole is mixed for approx. 30 minutes with the temperature maintained within the range from 30 to 40°C.

### Stage 2 - preparation of Premix 1.

Demineralised water in the quantity of 154.00 kg is placed in the mixer equipped with a stirrer and rotation speed adjuster, heating is turned on and the content is heated up to the temperature within the range of 30 to 40°C, the stirrer is activated and its speed is set to 600 rpm, and then the following are added: 0.175 kg of water solution of metallic silver nanoparticles embedded on a polyphenol matrix, 1.75 kg of surface-active siloxane agent, 2.80 kg of 26% water solution of polyethersiloxane defoamer with silica and 5.25 kg of 50% water solution of non-ionic polymeric dispersant. Then, rotation of the stirrer is reduced to 30 rpm and 98.0 kg of powdered copolymer of vinyl acetate and vinyl EDTA with an additive of polyvinyl alcohol are placed in the mixed, and afterwards 73.50 kg of borosilicate glass microspheres are added. On the final stage the following are added: 14.70 kg of thickener, i.e. hydrophobically modified ethylene oxide-urethane (HEUR) block copolymer thanks to which a homogenous consistency of Premix 2 is obtained which prevents sedimentation of glass spheres. After 30 minutes of mixing in the temperature of 30°C and with the stirrer speed of 30 rpm, the intermediate product is deemed ready for mixing with Premix 1.

### Stage 3 - mixing the Premixes

The quantity of 650 kg of Premix 1 is placed in a mixer equipped with a low-speed stirrer, heating is turned on and while continuously stirred with the speed of 120 rpm the mixer content is heated up to the temperature of 30-40°C. After approx. 30 minutes of mixing, the stirrer rotation speed is reduced to approx. 30 rpm and 350,2 kg of Premix 2 are placed inside with the temperature maintained within the range of 30 to 40°C and stirrer rotation speed of 30 rpm. After 30 minutes of homogenisation, the product is deemed ready to be put into packaging.

## Claims

1. Method of manufacturing of the thermoactive acrylic paint containing fillers, pigments, flame retardants, surface-active agents, silicates, acrylic copolymers, and glass microspheres, **characterised in that** on the first stage Premix 1 is manufactured by placing in a mixer 46 to 50 wt % of 45-48% of water dispersion of acrylic copolymers and while continuously mixing with the stirrer speed of 120 to 160 rpm, the dispersion is heated up to the temperature of 30 to 40°C, and afterwards the following are added:
- 50% water solution of polymeric dispersant in the quantity from 1.3 to 1.6% wt %,
- anti-foaming agent in the quantity from 0.75 to 0.85 wt %,
- 100% surface-active alkanodiol agent in the quantity from 1.4 to 1.5 wt %, and also a
- surface-active siloxane agent in the quantity from 1.3 to 1.5 wt % and the whole is homogenised for 9 to 10 min, and then 19 to 20 wt % of titanium dioxide (TiO₂) are added and further homogenised dynamically for 15 minutes at least, and afterwards the following are added subsequently:
- micronized calcium carbonate in the quantity from 12 to 13 wt %,
- micronized kaolin (4SiO₂x2Al₂O₃x4H₂O) in the quantity from 4.2 to 4.6 wt %,
- coalescent in the quantity from 1.4 to 1.5 wt %,
- isopropanol in the quantity from 2.2 to 2.4 wt %,
- hydrophobically modified ethylene oxide-urethane block copolymer in the quantity from 2.0 to 2.4 wt %, and
- demineralised water in the quantity from 4.0 to 4.5 wt %
and the whole is mixed for 20 to 30 minutes maintaining the temperature within the range of 30 to 40°C,
and the Premix 2 is made by placing demineralised water in the quantity from 42 to 45 wt % in the mixer and while mixing it is heated up to the temperature of 30 to 40°C, and then the following are added:
- surface-active siloxane agent in the quantity from 0.4 to 0.5wt %,
- 26% water solution of polyethersiloxane defoamer with silica in the quantity from 0.8 to 0.9 wt %,
- from 1 to 20 ppm of water solution of metallic silver nanoparticles having the size within the range between 3 to 15 nm embedded on a polyphenol matrix
- 50% water solution of non-ionic polymeric dispersant in the quantity from 1.2 to 1.6 wt %,
and the whole is dynamically mixed with the stirrer speed maintained at 300 to 500 rpm until a completely homogenised mixture is obtained however, for 20 min minimum, then the stirrer mixing speed is reduced to 30 to 40 rpm and the following are added:
- powdered copolymer of vinyl acetate and vinyl EDTA with an additive of polyvinyl alcohol in the quantity from 26 to 29 wt %, and
- from 20 to 24% wt % of borosilicate glass microspheres of particles density within the range from 0.125 to 0.6 g/ml, average particle size of 10-120 microns, wall thickness 0.5-1.5 microns and compressive strength of 17-1,240 bar
and the whole is further homogenised for 10 to 15 min, and then with the mixing continuously maintained 3.9 to 4.4 wt % of bonding agent are added and the process is continued until complete homogenisation is obtained within 20 to 30 min, and then, the previously prepared Premix 1 in the quantity from 60 to 70 wt % is placed in the mixer and for 25 to 35 min while being continuously mixed with the stirrer speed from 100 to 120 rpm it is heated up to the temperature of 30 to 40°C, and subsequently with mixing and temperature maintained at 30 to 40°C, the previously prepared Premix 2 is added in the quantity from 30 to 40 wt % and homogenisation process is conducted for 25 to 35 min with the temperature maintained within the range of 30 to 40°C, and then the stirrer rotation is reduced to 30 to 40 rpm, and with mixing continued the whole is still homogenised for 10 to 30 min with the temperature maintained within the range of 30 to 40°C.

2. Method according to claim 1, **characterised in that** to manufacture Premix 1 preferably 48.6 wt % are added of 45% water dispersion of acrylic copolymers and 1.5 wt % of 50% water solution of polymeric dispersant.

3. Method according to claims 1 or 2, **characterised in that** to manufacture Premix 1 anti-foaming agent, preferably 26% water solution of polyethersiloxane defoamer with silica is added in the quantity of 0.8 wt %.

4. Method according to any of claims from 1 to 3, **characterised in that** to manufacture Premix 1 the 100% surface-active alkanodiol agent is added in the quantity of 1.5 wt %.

5. Method according to any of claims from 1 to 4, **characterised in that** to manufacture Premix 1 surface-active siloxane agent is added in the quantity of 1.4 wt %.

6. Method according to any of claims from 1 to 5, **characterised in that** to manufacture Premix 1 hydrophobically modified ethylene oxide-urethane block copolymer is added in the quantity of 2.2 wt %.

7. Method according to any of claims from 1 to 6, **characterised in that** to manufacture Premix 1 titanium dioxide in the quantity of 19.5 wt % and micronized calcium carbonate in the quantity of 12.5 wt % are added.

8. Method according to any of claims from 1 to 7, **characterised in that** to manufacture Premix 1 micronized kaolin is added in the quantity of 4.5 wt %.

9. Method according to any of claims from 1 to 8, **characterised in that** to manufacture Premix 1 preferably 1.5 wt % of coalescent - an ethylene ester is added.

10. Method according to any of claims from 1 to 9, **characterised in that** to manufacture Premix 1 isopropanol is added in the quantity of 2.3 wt %.

11. Method according to any of the aforementioned claims from 1 to 10, **characterised in that** to manufacture Premix 1 demineralised water is added in the quantity of 4.2 wt %, and to Premix 2 - 44% of demineralised water is added.

12. Method according to any of claims from 1 to 11, **characterised in that** to manufacture Premix 2 surface-active siloxane agent is added in the quantity of 0.5 wt %.

13. Method according to any of claims from 1 to 12, **characterised in that** to manufacture Premix 2 the quantity of 0.8 wt % is added of 26% water solution of polyethersiloxane defoamer with silica.

14. Method according to any of claims from 1 to 13, **characterised in that** to manufacture Premix 2 the 50% water solution of non-ionic polymeric dispersant is added in the quantity of 1.5 wt %.

15. Method according to any of from 1 to 14, **characterised in that** to manufacture Premix 2 powdered copolymer of vinyl acetate and vinyl EDTA with an additive of polyvinyl alcohol is added in the quantity of 28 wt %.

16. Method according to any of claims from 1 to 15, **characterised in that** to manufacture Premix 2 borosilicate glass microspheres are added in the quantity of 21 wt %.

17. Method according to any of claims from 1 to 16, **characterised in that** to manufacture Premix 2 thickener is added, namely hydrophobically modified ethylene oxide-urethane block copolymer in the quantity of 4.2 wt %.

## Patentansprüche

1. Herstellungsverfahren für thermoaktive Acrylfarbe, die Füllstoffe, Pigmente, Flammhemmstoffe, oberflächenaktive Mittel, Silicate, Ackrylcopolymere und Glasmikrokugeln enthält, **gekennzeichnet dadurch, dass** in der ersten Phase die Vormischung 1 dadurch erzeugt wird, dass im Mischer von 46 bis zu 50 % Gew. 45-48% der Ackrylcopolymer-Wasser-Dispersion untergebracht werden und unter ständigem Rühren mit einer Umlaufgeschwindigkeit des Rührwerkes von 120 bis zu 160 Umdrehungen, die Dispersion bis zur Temperatur 30 bis 40°C erwärmt wird und anschließend hinzugefügt werden:
- 50 % Wasserlösung des Polymer-Dispergierungsmittels in einer Menge von 1,3 bis 1,6 % Gew.,
- Schaumdämpfer in einer Menge von 0,75 bis 0,85 % Gew.,
- 100 % berflächenaktives Alkanodiol in einer Menge von 1,4 bis 1,5 % Gew., sowie:
- oberflächenaktives Siloxanmittel in einer Menge von 1,3 bis zu 1,5 % Gew. und das Ganze wird 9-10 Minuten lang homogenisiert, und anschließend werden von 19 bis 20 % Gew. Titandioxid (TiO2) hinzugefügt und es wird weiter dynamisch mindestens 15 Minuten lang homogenisiert, und anschließend wird wie nachstehend hinzugefügt:
- mikronisiertes Calciumcarbonat in einer Menge von 12 bis zu 13 % Gew.,
- mikronisiertes Kaolin (4SiO2x2Al2O3x4H2O) in einer Menge von 4,2 bis 4,6 % Gew.,
- Koaleszent in einer Menge von 1,4 bis 1,5 % Gew.,
- Isopropanol in einer Menge von 2,2 bis 2,4 % Gew.,
- hydrophob modifiziertes **Blockcopolymer aus Ethylenoxid** mit Urethan in einer Menge von 2,0 bis 2,4 % Gew., sowie
- demineralisiertes Wasser in einer Menge von 4,0 bis 4,5 % Gew. und das Ganze wird 20 bis 30 Minuten lang gerührt, wobei eine Temperatur im Bereich von 30 bis 40°C erhalten wird, und die Vormischung 2 entsteht dadurch, dass im Mischer demineralisiertes Wasser in einer Menge von 42 bis 45 % Gew. untergebracht wird, und es während des Rührens bis zu einer Temperatur von 30 bis 40 °C erwärmt wird, wo darauffolgend wie folgt hinzugefügt wird:
- oberflächenaktives Siloxanmittel in einer Menge von 0,4 bis 0,5 Wt. %,
- 26% Wasserlösung des Polyetherophiloksan-Schaumdämpfers mit Siliciumdioxid in einer Menge von 0,8 bis 0,9 % Gew.,
- von 1 bis 20 ppm Wasserlösung der Nanoteilchen des metallischen Silbers mit der Größe im Bereich von 3 bis 15 nm, eingebettet in eine Polyphenol-Matrix
- 50 % Wasserlösung eines nichtionischen Polymer-Dispergierungsmittels in einer Menge von 1,2 bis 1,6 % Gew., während das Ganze dynamisch mit der Umlaufgeschwindigkeit des Rührwerkes, die auf dem Niveau von 300 bis 500 U./Min. aufrechterhalten wird, bis zur Erhaltung einer gänzlich homogenisierten Masse, jedoch mindestens 20 Minuten lang gerührt wird, anschließend wird die Umlaufgeschwindigkeit des Rührwerkes bis zu 30 bis zu 40 U./Min.:
- pulverisiertes Vinylacetat-Copolymer und Vinyl-EDTA mit Zugabe von Polyvinylalkohol in einer Menge von 26 bis 29 % Gew., sowie
- von 20 bis 24% Gew. der Mikrokugeln aus Borosilikatglas mit der Teilchendichte im Bereich von 0,125 bis 0,6 g/ml, mit der Durchschnittsteilchengröße 10-120 Mikron, Wandstärke 0,5-1,5 Mikron und Druckfestigkeit von 17-1 240 Bar, während das Ganze weiter 10-15 Minuten lang homogenisiert wird, und anschließend unter ständigem Rühren von 3,9 bis 4,4 % Gew. des Bindemittels dazu gegeben werden und der Prozess wird fortgesetzt, bis vollständige Homogenisierung innerhalb von 20-30 Minuten erzielt ist, darauffolgend wird die vorher vorbereitete Vormischung 1 in einer Menge von 60 bis 70 % Gew. im Mischer untergebracht und 25 bis 35 Minuten lang unter ununterbrochenem Rühren mit der Umlaufgeschwindigkeit des Rührwerkes von 100 bis 120 U./Min. bis zur Temperatur von 30 bis 40°C erwärmt, und dann unter Rühren und bei Halten der Temperatur von 30 bis 40°C wird die vorher vorbereitete Vormischung 2 in einer Menge von 30 bis 40 % Gew. dazu gegeben, und der Homogenisierungsprozess dauert von 25 bei 35 Minuten, wobei die Temperatur im Bereich von 30 bis 40°C gehalten wird, und anschließend werden die Umdrehungen des Rührwerkes bis zu 30 bis zu 40 U./Min. reduziert, und nach weiterem Rühren wird das Ganze weiterhin von 10 bis 30 Minuten lang bei im Bereich von 30 bis 40°C gehaltener Temperatur homogenisiert.

2. Verfahren nach Anspruch 1 oder 2, **gekennzeichnet dadurch, dass** zur Herstellung der Vormischung 1 am besten 48,6 % Gew. 45% der Wasserdispersion von Ackrylcopolymeren und 1,5% Gew. 50% der Wasserlösung des Polymer-Dispergierungsmittels dazu gegeben werden.

3. Verfahren nach Anspruch 1 oder 2, **gekennzeichnet dadurch, dass** zur Erzeugung der Vormischung 1 Schaumdämpfer vorteilhaft 26 % der Wasserlösung des Polyetherophiloksan-Schaumdämpfers mit Siliciumdioxid in der Menge von 0,8 % Gew. dazu gegeben wird.

4. Verfahren nach einem der Ansprüche von 1 bis 3, **gekennzeichnet dadurch, dass** zur Erzeugung der Vormischung 1 100 % des oberflächenaktiven Alkanodiols in der Menge von 1,5 % Gew. dazu gegeben werden.

5. Verfahren nach einem der Ansprüche von 1 bis 4, **gekennzeichnet dadurch, dass** zur Erzeugung der Vormischung 1 ein oberflächenaktives Siloxanmittel in der Menge von 1,4 % Gew. dazu gegeben wird.

6. Verfahren nach einem der Ansprüche von 1 bis 5, **gekennzeichnet dadurch, dass** zur Erzeugung der Vormischung 1 hydrophob modifiziertes Blockcopolymer aus Ethylenoxid mit Urethan in der Menge von 2,2 % Gew. dazu gegeben wird.

7. Verfahren nach einem beliebigen der Ansprüche von 1 bis 6, **gekennzeichnet dadurch, dass** zur Produktion der Vormischung 1 das Titandioxid in der Menge von 19,5 % Gew. und mikronisiertes Calciumcarbonat in der Menge von 12,5 % Gew. dazu gegeben werden.

8. Verfahren nach einem beliebigen der Ansprüche von 1 bis 7, **gekennzeichnet dadurch, dass** zur Produktion der Vormischung 1 mikronisiertes Kaolin in der Menge von 4,5 % Gew. dazu gegeben wird.

9. Verfahren nach einem beliebigen der Ansprüche von 1 bis 8, **gekennzeichnet dadurch, dass** zur Erzeugung der Vormischung 1 worteilhaft 1,5 % Gew. des Ethylesters dazu gegeben werden.

10. Verfahren nach einem beliebigen der Ansprüche von 1 bis 9, **gekennzeichnet dadurch, dass** zur Erzeugung der Vormischung 1 Isopropanol in der Menge von 2,3 % Gew. dazu gegeben wird.

11. Verfahren nach einem beliebigen der vorstehenden Ansprüche von 1 bis 10, **gekennzeichnet dadurch, dass** für die Produktion der Vormischung 1 demineralisiertes Wasser in der Menge von 4,2 % Gew., und zur Vormischung 2 - 44 % demineralisierten Wassers dazu gegeben wird.

12. Verfahren nach einem beliebigen der Ansprüche von 1 bis 11, **gekennzeichnet dadurch, dass** zur Erzeugung der Vormischung 2 das oberflächenaktive Siloxanmittel in der Menge von 0,5 % Gew. dazu gegeben wird.

13. Verfahren nach einem beliebigen der Ansprüche von 1 bis 12, **gekennzeichnet dadurch, dass** zur Erzeugung der Vormischung 2 0,8 % Gew. 26 % Wasserlösung des Polyeterhersiloxan-Schaumbildners mit Siliciumdioxid dazu gegeben wird.

14. Verfahren nach einem der Ansprüche von 1 bis 13, **gekennzeichnet dadurch, dass** zur Produktion der Vormischung 2 50 % Wasserlösung des nichtionischen Polymer-Dispergierungsmittels in der Menge von 1,5 % Gew. dazu gegeben wird.

15. Verfahren nach einem der Ansprüche von 1 bis 14, **gekennzeichnet dadurch, dass** zur Produktion der Vormischung 2 pulverisiertes Vinylacetat-Copolymer und Vinyl-EDTA mit Zusatz von Polyvinylalkohol in der Menge von 28 % Gew. dazu gegeben wird.

16. Verfahren nach einem der Ansprüche von 1 bis 15, **gekennzeichnet dadurch, dass** zur Produktion der Vormischung 2 Mikrogugeln aus Borosilikatglas in der Menge von 21 % Gew. dazu gegeben werden.

17. Verfahren nach einem der beliebigen Ansprüche von 1 bis 16, **gekennzeichnet dadurch, dass** für die Produktion der Vormischung 2 Verdickungsmittel, und zwar hydrophob modifiziertes Blockcopolymer aus Ethylenoxid mit Urethan in der Menge von 4,2 % Gew. dazu gegeben werden.

## Revendications

1. Le procédé de fabrication de peinture acrylique thermoactive contenant des charges, des pigments, des retardateurs de flamme, des agents tensioactifs, des silicates, des copolymères acryliques et des microbilles de verre, **caractérisé en ce que,** dans la première étape, le Premix 1 est produit en plaçant entre 46 et 50 % en poids de la dispersion aqueuse à 45-48 % des copolymères acryliques dans un agitateur et en chauffant la dispersion à 30 à 40 °C sous agitation continue à une vitesse de mélange de 120 à 160 tr/min, puis en ajoutant :
- une solution aqueuse à 50 % du dispersant polymère de 1,3 à 1,6 % en poids,
- un agent antimousse en la quantité de 0,75 à 0,85 % en poids,
- l'alcanediol 100 % tensioactif en la quantité de 1,4 à 1,5 % en poids, et aussi :
- un agent tensioactif siloxane en la quantité de 1,3 à 1,5 % en poids et en homogénéisant le tout pendant 9 à 10 minutes, puis en ajoutant de 19 à 20 % en poids de dioxyde de titane (TiO2) et en poursuivant l'homogénéisation dynamique pendant au moins 15 minutes, et puis en ajoutant ce qui suit :
- du carbonate de calcium micronisé en la quantité de 12 à 13 % en poids,
- du kaolin micronisé (4SiO2x2Al2O3x4H2O) en quantité de 4,2 à 4,6 % en poids,
- un coalescent en la quantité de 1,4 à 1,5 % en poids,
- de l'isopropanol en la quantité de 2,2 à 2,4 % en poids,
- un copolymère à blocs d'oxyde d'éthylène hydrophile avec -de l'uréthane en la quantité de 2,0 à 2,4 % en poids, et
- de l'eau déminéralisée en la quantité de 4,0 à 4,5 % en poids, le tout étant mélangé pendant 20 à 30 minutes, en maintenant la température entre 30 et 40 °C, et **en ce que** le Premix 2 est produit en plaçant de l'eau déminéralisée en la quantité de 42 à 45 % en poids dans l'agitateur et en la chauffant, pendant le mélange, à 30 à 40 °C, en ajoutant ensuite ce qui suit :
- un agent tensioactif siloxane en la quantité de 0,4 à 0,5 % en poids,
- une solution aqueuse à 26 % de l'agent antimousse polyéthersiloxane avec de la silice en la quantité de 0,8 % à 0,9 % en poids,
- d'1 à 20 ppm de solution aqueuse de nanoparticules d'argent métallique de 3 à 15 nm déposées sur une matrice polyphénolique,
- une solution aqueuse à 50 % d'un dispersant polymérique non ionique en la quantité de 1,2 à 1,6 % en poids, alors que le tout est mélangé dynamiquement avec une vitesse d'agitation maintenue à un niveau de 300 à 500 tr/min jusqu'à l'obtention du mélange entièrement homogénéisé, cependant, pendant au moins 20 minutes, puis la vitesse de l'agitateur est réduite à 30 à 40 tr/min :
- un copolymère d'acétate de vinyle en poudre et d'EDTA vinylique additionné d'alcool polyvinylique en la quantité de 26 à 29 % en poids, et
- 20 à 24 % en poids de microbilles de verre borosilicaté avec une densité de particules comprise entre 0,125 et 0,6 g/ml, une taille moyenne de particules de 10-120 microns, une épaisseur de parois de 0,5-1,5 microns et une résistance à la compression de 17-1 240 bars le tout étant toujours homogénéisé pendant 10 à 15 minutes, puis, sous agitation continue, entre 3,9 et 4,4 % en poids du liant est ajouté et le processus se poursuit jusqu'à ce que l'homogénéisation complète soit atteinte en 20 à 30 minutes, puis le Premix 1 préparé en la quantité de 60 à 70 % en poids est placé dans l'agitateur et, pendant 25 à 35 minutes, sous agitation continue à une vitesse de 100 à 120 tr/min, il est chauffé à une température de 30 à 40 °C, puis, en remuant et en maintenant une température de 30 à 40 °C, le Premix 2 préparé précédemment est ajouté en la quantité de 30 à 40 % en poids, et le processus d'homogénéisation dure de 25 à 35 minutes à une température maintenue entre 30 et 40 °C, puis la vitesse de l'agitateur est réduite à 30 à 40 tr/min, et après un nouveau mélange, le tout est homogénéisé pendant 10 à 30 minutes à une température maintenue entre 30 et 40 °C.

2. Le procédé selon les revendications 1 ou 2, **caractérisé en ce que**, de préférence, 48,6 % en poids de la dispersion aqueuse à 45 % des copolymères acryliques et 1,5 % en poids de la solution aqueuse à 50 % de dispersant polymère sont ajoutés à la production du Premix 1.

3. Le procédé selon les revendications 1 ou 2, **caractérisé en ce qu'**un agent antimousse, de préférence une solution aqueuse à 26 % de l'agent antimousse polyéthersiloxane avec de la silice en la quantité de 0,8 % en poids, est ajouté à la production du Premix 1.

4. Le procédé selon l'une des revendications d'1 à 3, **caractérisé en ce qu'**un agent tensioactif alcanediol à 100 % en la quantité d'1,5 % en poids est ajouté à la production du Premix 1.

5. Le procédé selon l'une des revendications d'1 à 4, **caractérisé en ce qu'**un agent tensioactif siloxane en la quantité de 1,4 % en poids, est ajouté à la production du Premix 1.

6. Le procédé selon l'une des revendications d'1 à 5, **caractérisé en ce qu'**un copolymère à blocs d'oxyde d'éthylène hydrophile avec de l'uréthane en la quantité de 2,0 à 2,4 % en poids est ajouté à la production du Premix 1.

7. Le procédé selon l'une quelconque des revendications d'1 à 6, **caractérisé en ce que** du dioxyde de titane en la quantité de 19,5 % en poids et du carbonate de calcium micronisé en la quantité de 12,5 % en poids sont ajoutés à la production du Premix 1.

8. Le procédé selon l'une quelconque des revendications d'1 à 7, **caractérisé en ce que** du kaolin micronisé en la quantité de 4,5 % en poids est ajouté à la production du Premix 1.

9. Le procédé selon l'une quelconque des revendications d'1 à 8, **caractérisé en ce que** 1,5 % en poids de l'ester d'éthylène est ajouté de préférence à la production du Premix 1.

10. Le procédé selon l'une quelconque des revendications d'1 à 8, **caractérisé en ce que** de l'isopropanol en la quantité de 2,3 % en poids est ajouté à la production du Premix 1.

11. Le procédé selon l'une quelconque des revendications d'1 à 10, **caractérisé en ce que** de l'eau déionisée en la quantité de 4,2 % en poids est ajoutée à la production du Premix 1 et 44 % d'eau déionisée est ajoutée à la production du Premix 2.

12. Le procédé selon l'une quelconque des revendications d'1 à 11, **caractérisé en ce qu'**un agent tensioactif siloxane en la quantité de 0,5 % en poids est ajouté à la production du Premix 2.

13. Le procédé selon l'une quelconque des revendications d'1 à 12, **caractérisé en ce qu'**une solution aqueuse à 26 % de l'agent antimousse polyéthersiloxane avec de la silice en la quantité de 0,8 % en poids est ajouté à la production du Premix 2.

14. Le procédé selon l'une des revendications d'1 à 13, **caractérisé en ce que** qu'une solution aqueuse à 50 % de dispersant polymère non ionique en la quantité de 1,5 % en poids est ajoutée à la production du Premix 2.

15. Le procédé selon l'une des revendications d'1 à 14, **caractérisé en ce qu'**un copolymère d'acétate de vinyle en poudre et d'EDTA vinylique additionné d'alcool polyvinylique en la quantité de 28 % en poids sont ajoutés à la production du Premix 2.

16. Le procédé selon l'une des revendications d'1 à 15, **caractérisé en ce que** des microbilles de verre borosilicaté en la quantité de 21 % en poids, sont ajoutées à la production du Premix 2.

17. Le procédé selon l'une quelconque des revendications d'1 à 16, **caractérisé en ce qu'**un épaississant, à savoir un copolymère à blocs d'oxyde d'éthylène hydrophile avec de l'uréthane en la quantité de 4,2 % en poids, est ajouté à la production du Premix 2.
